Europäisches Patentamt

European Patent Office

Office européen des brevets

(11) Veröffentlichungsnummer: **0 259 386 B1**

(12) **EUROPÄISCHE PATENTSCHRIFT**

(45) Veröffentlichungstag der Patentschrift:
17.04.91 Patentblatt 91/16

(51) Int. Cl.⁵ : **G01N 35/06, G01N 21/25**

(21) Anmeldenummer: **87901325.8**

(22) Anmeldetag : **27.02.87**

(86) Internationale Anmeldenummer:
**PCT/CH87/00022**

(87) Internationale Veröffentlichungsnummer:
**WO 87/05401 11.09.87 Gazette 87/20**

(54) PHOTOMETRISCHES ANALYSIERGERÄT.

(30) Priorität : 06.03.86 CH 924/86

(43) Veröffentlichungstag der Anmeldung :
16.03.88 Patentblatt 88/11

(45) Bekanntmachung des Hinweises auf die
Patenterteilung :
17.04.91 Patentblatt 91/16

(84) Benannte Vertragsstaaten :
AT BE CH DE FR GB IT LI LU NL SE

(56) Entgegenhaltungen :
EP-A- 0 025 350
EP-A- 0 046 430

(56) Entgegenhaltungen :
US-A- 3 687 632
US-A- 4 322 216
Patent Abstracts of Japan, Vol. 8, No. 245
(P-312)(1682), 10 Nov. 1984 & JP-A-59 119 268

(73) Patentinhaber : TECAN AG ANALYTISCHE
INSTRUMENTE
Landhaus Holgass
CH-8634 Hombrechtikon (CH)

(72) Erfinder : ABPLANALP, Heinz
Landhaus Holgass
CH-8634 Hombrechtikon (CH)

(74) Vertreter : Lusuardi, Werther Giovanni
Dr. Lusuardi AG Kreuzbühlstrasse 8
CH-8008 Zürich (CH)

## Beschreibung

Die Erfindung bezieht sich auf ein photometrisches Analysiergerät gemäss der Gattung Patentanspruchs 1. Solche Analysiergeräte dienen insbesondere zur Endpunktsbestimmung von chemischen Reaktionen, beispielsweise von Enzymimmuntests (EIA oder ELISA).

Die bisher bekannt gewordenen photometrischen Analysiergeräte sind kompliziert im Analysenablauf, fehleranfällig wegen der fehlenden Vollautomatisierung und wenig vielseitig, da die einzelnen Analysenschritte unflexibel miteinander verknüpft sind

Aus der DE-AI 3500639 ist beispielsweise ein photometrisches Analysiergerät bekannt, welches eine fest angeordnete Probenabgabevorrichtung, eine separate ebenfalls fest angeordnete Reagensabgabevorrichtung, eine Vielzahl von parallel zur Horizontalebene arbeitenden Photometern, einen lediglich die Photometriewerte berechnenden Rechner sowie eine separate Steuervorrichtung für die verschiedenen mechanischen Bewegungsund Abgabevorrichtungen aufweist. Dieses bekannte Gerät ist schwerfällig im Betrieb und kann nicht an sich ändernde Analysenverfahren- und bedürfnisse angepasst werden. Die fehlende rechnergesteuerte Ueberwachung des Gesamtsystems und die zahlreichen separaten Betätigungskomponenten erhöhen die Fehler-und Störanfälligkeit dieses Gerätes.

Weiter ist aus Patent Abstracts of Japan, Vol. 8, No. 245 (P-312)(1682), 10. November 1984, & JP-A-59/119268 ein Analysiergerät bekannt, welches einen in x/y-Richtung in der Horizontalebene beweglich angeordneten Probenverteilarm aufweist, welcher aus einem rotierbaren Teller verschiedene Reagentien entnehmen und zu plattenförmigen Gebilden (in dieser Schrift mit den Zahlen 3 und 4 gekennzeichnet) transportieren kann. Es ist jedoch dieser Schrift nicht direkt zu entnehmen, dass die plattenförmigen Gebilde Mikrotiterplatten sein könnten und dass diese einer photometrischen Analyse zugeführt würden.

Schliesslich ist aus der EP-A- 0046430 ein weiteres Analysiergerät bekannt, bei dem eine in x/y-Richtung in der Horizontalebene beweglich angeordnete Mikrotiterplatte mittels eines Lichtstrahles abgetastet wird und dann mittels eines zusätzlichen Spiegelsystems einer Vielzahl von Photodetektoren zugeführt wird, z.B. in Form von $14 \times 14 = 256$ photoelektrischen Zellen, welche den Lichtstrahl punktweise auswerten können. Über die Art der Proben- und Reagens-Handhabung in diesem Analysiergerät ist nichts ausgesagt. Dieses Gerät gestattet somit keine automatisierte Probenbereitstellung und Reagensabgabe und ist durch das zusätzliche optische Spiegelsystem kompliziert und teuer in der Herstellung und im Betrieb.

Hier will die Erfindung Abhilfe schaffen. Die Erfindung wie sie in den Ansprüchen gekennzeichnet ist, löst die Aufgabe ein photometrisches Analysiergerät zu schaffen, das einen vollständig kontrollierten Analysenablauf von der Vorbereitung der Proben bis zur Resultatauswertung der Photometriemessungen erlaubt und durch einen einfachen Aufbau und eine optimale Verknüpfung der verschiedenen Komponenten höchste Sicherheit und Flexibilität garantiert.

Die durch die Erfindung erreichten Vorteile sind im wesentlichen darin zu sehen, dass das Analysiergerät kompakt und vielseitig ist und dank der weitestgehenden Automatisierung und Steuerung der Bewegungsabläufe praktisch fehlerfrei arbeiten kann.

Das erfindungsgemässe Analysiergerät und dessen Betriebsweise wird nachfolgend anhand eines Beispiels im Detail beschrieben. Auf einem Primärrack 1 wurden die für die gewählte Analyse, beispielsweise einem Enzymimmuntest (EIA oder ELISA) erforderlichen Reagenzien und die zu untersuchenden Testflüssigkeiten in einer dem Rechenprogramm entsprechenden Positionierung bereitgestellt. Das Primärrack 1 wird auf die dazu gekennzeichnete Stelle des Analysiergerätes gestellt und die rechnergesteuerte Automatik in Betrieb gesetzt. Das Analysiergerät entnimmt nun mittels der am Probenverteilarm 5 angebrachten Einkanalpipette 11 die für die Analyse notwendigen Mengen an Testflüssigkeiten und Reagenzien und beschickt damit die an der dazu gekennzeichneten Stelle des Kreuztisches 3 liegende Mikrotiterplatte 4.

Die derart vorbereitete Mikrotiterplatte 4 wird nun auf dem in der Horizontalebene in x/y-Richtung beliebig bewegbaren Kreuztisch 3 in den Inkubator 10 gefahren. Die Aufgabe des Inkubators 10 ist es die auf der Mikrotiterplatte 4 befindlichen Flüssigkeiten bei erhöhter Temperatur (25-37°C) zu lagern, um dadurch beispielsweise eine Beschichtung der Mikrotiterplatte 4 mit Antigenen oder Antikörpern zu bewirken. Da die Inkubationszeit typischerweise zwischen 30 und 120 Minuten liegt ist im Inkubator 10 ein Lift 13 vorgesehen, der eine vertikale Lagerung von bis zu sechs Mikrotiterplatten 4 erlaubt. Nach erfolgter Inkubation wird die Mikrotiterplatte 4 wieder aus dem Inkubator 10 in ihre ursprüngliche Position auf dem Kreuztisch 3 bewegt und mittels der 4-fach Peristaltik des Mehrfachkopfes 12 (Doppelvierfachkopf, dessen 8 Nadeln je eine eigene Leitung bis zur Pumpe besitzen) ausgewaschen. Die Spülflüssigkeit wird dabei in den Spülflüssigkeitstrog 9 entleert. Die auf der Mikrotiterplatte 4 zurückbleibende Beschichtung mit Antigenen oder Antikörpern wird mittels der Einkanalpipette 11, bzw. mittels der 4-fach Peristaltik des Reagensabgabeteiles des Mehrfachkopfes 12 mit den erforderlichen Reagentien versetzt und die Mikrotiterplatte wieder in den Inkubator 10 gefahren. Dieser Vorgang (Auswaschen/Reagenszugabe/Inkubation) kann je nach dem durchzuführenden Test mehrmals wiederholt werden.

Im letzten Schritt läuft dabei die für die anschliessende photometrische Messung nötige Farbreaktion ab, katalysiert zum Beispiel durch ein Peroxidase-Enzym. Die Farbreaktion kann entweder durch Zugabe einer geeigneten Lösung gestoppt oder direkt nach einer programmierten Reaktionsdauer ausgemessen werden.

Die Mikrotiterplatte 4 wird hierauf auf dem Kreuztisch 3 in den Strahlengang 7 des Photometers 6 gefahren, wo nun die photometrische Ausmessung der einzelnen in den Vertiefungen 14 der Mikrotiterplatte 4 liegenden, gefärbten Lösungen erfolgen kann. Die verwendeten Wellenlängen liegen typischerweise zwischen 340 bis 700 nm, wobei vorzugsweise bichromatisch mit einem Filterphotometer (8 verschiedene Wellenlängen) gearbeitet wird.

Die Verwendung von als Flachbodenplatten ausgebildeten Mikrotiterplatten 4 hat sich besonders bewährt, da durch den flachen Boden der Vertiefungen 14 keine, die photometrische Messung verfälschende Ablenkung des Strahlenganges 7 erfolgen kann, wie dies bei Rundbodenplatten der Fall ist.

Nach erfolgter photometrischer Ausmessung kann die Mikrotiterplatte 4 manuell vom Kreuztische 3 entnommen und weggeworfen werden.

Im übrigen werden sämtliche Arbeitsgänge automatisch ausgeführt und vom programmierbaren Rechner 8 überwacht. Die eigentliche Steuerung des Analysiergerätes erfolgt dabei durch einen separaten Rechner, beispielsweise einem IBM PC, währenddem ein in das Analysiergerät integrierter Rechner lediglich zur Verteilung der Befehle an die verschiedenen Subkomponenten, sowie zu deren Ueberwachung dient.

Eine weitere verbesserte Ausführung des erfindungsgemässen Analysiergerätes besteht darin, das Primärrack 1 in Form eines rotierbaren Tellers, und das Analysiergerät selbst mit einer Strichkode-Lesevorrichtung auszugestalten. Dadurch kann die Zuverlässigkeit der Analyse nochmals erhöht werden, da eine Probenverwechslung praktisch ausgeschlossen werden kann.

Die Kapazität und Flexibilität des erfindungsgemässen photometrischen Analysiergerätes kann noch weiter gesteigert werden, indem man im Zuführbereich des Kreuztisches 3 eine Lagerstation 15 für Mikrotiterplatten 4 vorsieht, welche vorzugsweise mit einer Liftmechanik ausgerüstet ist und die Lagerung von frischen oder bereits vorbereiteten Mikrotiterplatten 4 gestattet.

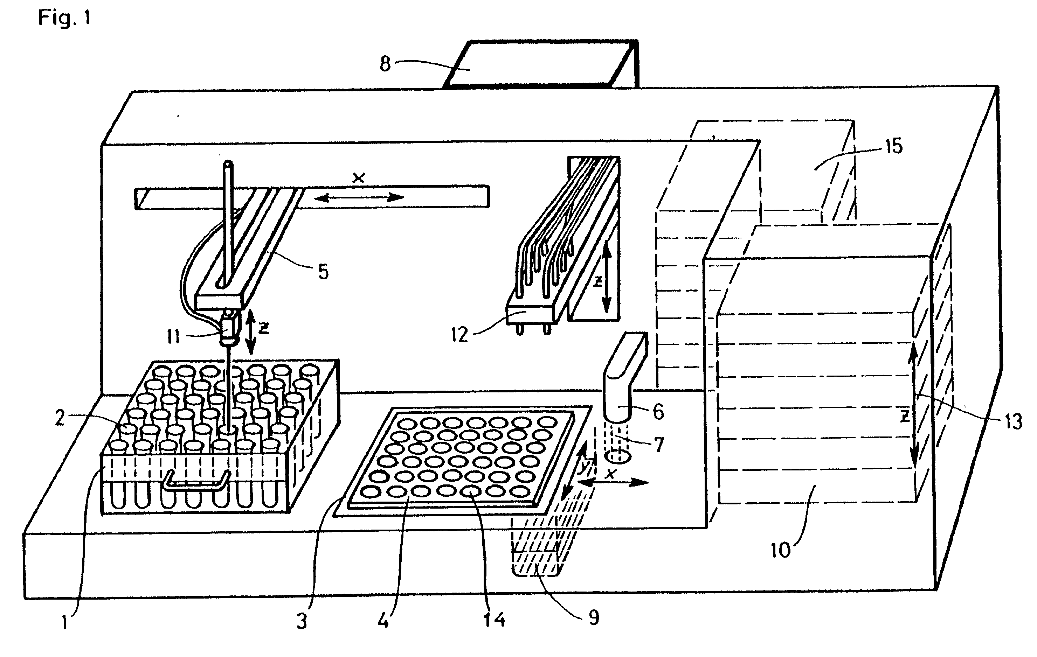

## Ansprüche

1. Photometrisches Analysiergerät, insbesondere zur Durchführung von Enzymimmuntests, das falgende Einzelteile aufweist :
   - ein Primärrack (1) zur Aufnahme einer Vielzahl von Probegläsern (2) ;
   - einen neben dem Primärrack (1) angeordneten, in der Horizontalebene in x/y-Richtung beliebig positionierbaren Kreuztisch (3) zur Aufnahme einer Mikrotiterplatte (4) ;
   - einen über dem Primärrack (1) und dem Kreuztisch (3) angeordneten, in der Horizontalebene in x/y-Richtung beliebig positionierbaren Probenverteilarm (5) ;
   - ein einziges, fest im Positionierbereich des Kreuztisches (3) angeordnetes Photometer (6), dessen Strahlengang (7) die x/y-Ebene des Kreuztisches (3) senkrecht durchstösst ; und
   - einen programmierbaren Rechner (8) zur Steuerung des gesamten photometrischen Analysiergerätes.

2. Photometrisches Analysiergerät nach Anspruch 1, gekennzeichnet durch einen über dem Kreuztisch (3) in der Vertikalrichtung z beweglich angeordneten Mehrfachkopf (12) mit Absaugfunktion und/oder Reagensabgabefunktion.

3. Photometrisches Analysiergerät nach Anspruch 1 oder 2, gekennzeichnet durch einen Inkubator (10) zur Aufnahme einer oder mehrerer Mikrotiterplatten (4), vorzugsweise mit einer Liftmechanik (13).

4. Photometrisches Analysiergerät nach einem der Ansprüche 1 bis 3, dadurch gekennzeichnet, dass der Probenverteilarm (5) eine in der Vertikalen bewegbare Einkanalpipette (11) trägt.

5. Photometrisches Analysiergerät nach einem der Ansprüche 1 bis 4, dadurch gekennzeichnet, dass das Primärrack (1) aus einem rotierbaren Teller besteht.

6. Photometrisches Analysiergerät nach einem der Ansprüche 1 bis 5, dadurch gekennzeichnet, dass der vorzugsweise als Doppelvierfachkopf ausgebildete Mehrfachkopf (12) eine 4-fach Peristaltik zur Reagensabgabe und/oder eine 4-fach Peristaltik zum Absaugen aufweist.

7. Photometrisches Analysiergerät nach einem der Ansprüche 1 bis 6, dadurch gekennzeichnet, dass die Mikrotiterplatte (4) als Flachbodenplatte ausgebildet ist.

8. Photometrisches Analysiergerät nach einem der Ansprüche 1 bis 7, gekennzeichnet durch einen unter der x/y-Ebene des Kreuztisches (3) liegenden Spülflüssigkeitstrog 9.

9. Photometrisches Analysiergerät nach einem der Ansprüche 1 bis 8, dadurch gekennzeichnet, dass es mit einer Strichkode-Lesevorrichtung ausgerüstet ist.

## Claims

1. Photometric analyzer, in particular for performing enzyme immune tests, comprising the following elements :

- a primary rack (1) for holding a variety of sample tubes (2) ;
- a work table (3) located alongside the primary rack (1) which can be positioned in any x/y direction desired in a horizontal plane for supporting a microtitration plate (4) ;
- a sample distribution arm (5) which is located above the primary rack (1) and the work table (3) and which can be positioned in any x/y direction in a horizontal plane ;
- a single photometer (6) firmly located in the positioning sector of the work table (3) whose beam path (7) vertically intersects the x/y plane of the work table (3) ; and a programmable computer (8) for controlling the entire photometric analyzer.

2. Photometric analyzer according to claim 1, characterized by a multiple head (12) with a suction and/or reagent release function which is located above the work table (3) and can move in the vertical direction z.

3. Photometric analyzer according to claim 1 or 2, characterized by an incubator (10) for holding one or more microtitration plates (4), preferably with a lift mechanism (13).

4. Photometric analyzer according to one of the claims 1 to 3, characterized by the fact that the sample distribution arm (5) bears a single channel pipette (11) which can be moved in the vertical direction z.

5. Photometric analyzer according to one of the claims 1 to 4, characterized by the fact that the primary rack (1) consists of a rotating plate.

6. Photometric analyzer according to one of the claims 1 to 5, characterized by the fact that the multiple head (12), which preferably is designed as a double four-way head, has a four-way peristalsis for reagent release and/or a four-way peristalsis for suction.

7. Photometric analyzer according to one of the claims 1 to 6, characterized by the fact that the microtitration plate (4) is designed as a flat base plate.

8. Photometric analyzer according to one of the claims 1 to 7, characterized by a rinse fluid trough (9) which is located below the x/y plane of the work table (3).

9. Photometric analyzer according to one of the claims 1 to 8, characterized by the fact that it is equipped with a coded line reader.


## Revendications

1. Analyseur photométrique, en particulier pour des essais de résistance aux enzymes, lequel analyseur comprend les unités suivantes :
   - un châssis primaire (1) pour recevoir plusieurs éprouvettes d'échantillons ;
   - une table à chariots croisés (3) disposée à côté du châssis primaire (1) dans un plan horizontal de manière à pouvoir être positionnée à volonté dans les directions X/Y, ladite table étant destinée à recevoir une plaque de microdosage volumétrique (4) ;
   - un bras (5) distributeur d'échantillons disposé au-dessus du châssis primaire (1) et de la table à chariots croisés (3) dans un plan horizontal et pouvant être positionné à volonté dans les directions X/Y ;
   - un photomètre (6) unique fixe, disposé dans la zone de positionnement de la table à chariots croisés (3), le trajet des rayons (7) traversant perpendiculairement le plan X/Y de la table à chariots croisés (3) ; et
   - un calculateur programmable (8) pour la commande de l'analyseur photométrique tout entier.

2. Analyseur photométrique selon la revendication 1, caractérisé par une tête multiple (12) montée pour pouvoir être déplacée dans la direction verticale Z au-dessus de la table à chariots croisés (3) avec une fonction d'aspiration et/ou une fonction de distribution de réactif.

3. Analyseur photométrique selon la revendication 1, caractérisé par un incubateur (10) pour la réception d'une ou plusieurs plaques de microdosage volumétrique (4), de préférence avec un mécanisme élévateur (13).

4. Analyseur photométrique selon une des revendications 1 à 3, caractérisé en ce que le bras (5) distributeur d'échantillons porte une pipette (11) à un canal déplaçable dans la direction verticale.

5. Analyseur photométrique selon une des revendications 1 à 4, caractérisé en ce que le châssis primaire (1) consiste en une platine tournante.

6. Analyseur photométrique selon une des revendications 1 à 5, caractérisé en ce que la tête multiple (12), réalisée de préférence sous forme d'une tête quadruple double, présente une pompe péristaltique quadruple pour la distribution de réactifs et/ou une pompe péristaltique quadruple pour l'aspiration.

7. Analyseur photométrique selon une des revendications 1 à 6, caractérisé en ce que la plaque de microdosage volumétrique (4) est réalisée sous forme d'une plaque à fond plat.

8. Analyseur photométrique selon une des revendications 1 à 7, caractérisé par un bac (9) pour fluide de lavage, disposé sous le plan X/Y de la table à chariots croisés (3).

9. Analyseur photométrique selon une des revendications 1 à 8, caractérisé en ce qu'il est muni d'un dispositif de lecture de codes à barres.

Fig. 1